# EUROPÄISCHE PATENTSCHRIFT

(11) **EP 0 689 479 B1**
(45) Veröffentlichungstag und Bekanntmachung des Hinweises auf die Patenterteilung: **07.05.1997**
(21) Anmeldenummer: 94911057.1
(22) Anmeldetag: 17.03.1994
(51) Int. Cl.: B03B 5/28, B03B 5/36, B03B 5/44

(54) **VERFAHREN ZUR TRENNUNG VON FESTSTOFFGEMISCHEN VERSCHIEDENER DICHTE, TRENNFLÜSSIGKEIT UND VORRICHTUNG ZUR DURCHFÜHRUNG DES VERFAHRENS**
PROCESS FOR SEPARATING MIXTURES OF SOLIDS OF DIFFERENT DENSITY, SEPARATING LIQUID AND DEVICE FOR IMPLEMENTING THE PROCESS
PROCEDE DE SEPARATION DE MELANGES DE MATIERES SOLIDES DE DIFFERENTES DENSITES, LIQUIDE DE SEPARATION ET DISPOSITIF PERMETTANT DE METTRE EN OEUVRE LE PROCEDE

(30) Priorität: 18.03.1993 DE 4309325; 18.03.1993 DE 4309326
(43) Veröffentlichungstag der Anmeldung: 03.01.1996
(73) Patentinhaber: PAGENKOPF, Ingeborg, 12619 Berlin (DE)
(72) Erfinder: PAGENKOPF, Ingeborg, D-12619 Berlin (DE); ALLIES, Manfred, D-10319 Berlin (DE)
(74) Vertreter: Walter, Wolf-Jürgen
(86) Internationale Anmeldenummer: DE9400313
(87) Internationale Veröffentlichungsnummer: WO9421382

(56) Entgegenhaltungen:
- EP-A- 0 469 904
- DE-A- 2 900 666
- DE-A- 3 800 204
- DE-C- 3 305 517
- FR-A- 2 104 667
- GB-A- 1 568 749
- US-A- 1 854 107
- US-A- 2 266 840
- PATENT ABSTRACTS OF JAPAN vol. 9, no. 59 (C-270) (1782) 15. März 1985 & JP,A,59 196 760 (CITIZEN TOKEI K.K.) 8. November 1984

## Beschreibung

Die Erfindung betrifft ein Verfahren zur Trennung von Feststoffgemischen verschiedener Dichte, eine Trennflüssigkeit und eine Vorrichtung zur Durchführung des Verfahrens. Das Verfahren ist vorallem für Analyse und technische Aufbereitung von Abfallprodukten der Gruppe Kunststoffe, Glas und Elektroschrott geeignet.

Bei der Gewinnung von Recyclingprodukten aus Abfallgemischen sind die Aufbereitung und die Sortierung die ersten Verarbeitungsstufen. Es sind Stoffgemische unterschiedlichster Art mit mengenmäßig wechselnden Anteilen in Trennprozesse einzuordnen. Aus der Summe der Probleme, die am Anfang bei Recyclingverfahren stehen, ist die Aussage zur Trennfähigkeit von Abfallgemischen und die Bestimmung von Wertstoffanteilen die Grundvoraussetzung für ein wirtschaftliches Betreiben von Anlagen. Daher bedarf es neben der Entwicklung beziehungsweise Weiterentwicklung von Trennverfahren gleichermaßen der Kontrollmöglichkeit der Selektivität der Trennung und der Bestimmung der Anreicherung der Wertstoffe über alle Prozeßstufen. Gegenwärtig gibt es am Markt keine prozeßbegleitenden Meßmethoden bzw. Geräte, die das Betreiben von Recyclinganlagen hinsichtlich der Selektivität der Trennung bzw. der Anreicherung der Kunststoffe gestatten.

Bisher erfolgt die Bestimmung von Wertstoffanteilen in Abfallgemischen durch Handsortierung und daraus resultierenden Sortieranalysen bei Abfallerhebungen (Härdtle,G., Marek,K., Bilitewski,B., Kijewski,K. "Recycling von Kunststoffabfällen" Berlin: E.Schmidt, 1991, 27. Beiheft zu MÜLL UND ABFALL, S. 17) oder durch die aufwendige Methode der Handzerlegung und Sortierung in Form von Wertstofferhebungen bei Elektro- und Elektronikschrott, Automobilrecycling (von Essen, U. "Recyclingpraxis Kunststoffe, Verl. TÜV Rheinland GmbH, Köln 1993, Kap. 8.2, S. 3-5).

Bekannt sind bisher Anwendungen automatischer Sortieranlagen zur Trennung von PVC- und PET-Flaschen auf Basis der Röntgenfluoreszenzanalyse (Identifizierung von PVC) in den USA (Gottesman, R.T., The Vinyl Institute, USA, IUPAC Internat. Sympos. Recycling of Polymers, Marbella 1991, Separation of PVC and PET and other plastic using automatic sortation devices). Der Reinheitsgrad von PET ist jedoch nicht befriedigend, so daß nach der automatischen Sortierung eine Flotation zur sortenreinen Trennung erforderlich ist.

Die bisherigen analytischen Verfahren zur Trennung von Kunststoffgemischen können lediglich zur Input-Beurteilung vor der Prozeßstufe der Zerkleinerung herangezogen werden. Die notwendige prozeßbegleitende Analytik und die Beurteilung der Wertstoffanreicherung kann auf diese Weise nicht vorgenommen werden, da eine Vereinzelung nach der Zerkleinerung technologisch nicht mehr beherrschbar ist und ein Probenquerschnitt ohne Kenntnis der Massenströme nicht aussagefähig ist.

Eine bereits praktisch angewandte Methode zur Trennung von Stoffen nach ihrer Dichte ist die Verwendung von Schwerflüssigkeiten und Schwertrüben. Das Prinzip dieser Methode besteht darin, daß eine Schwerflüssigkeit oder Schwertrübe auf eine bestimmte gewünschte Dichte eingestellt wird. Dazu werden verbreitet wäßrige Feststoffsuspensionen eingesetzt. Derartige Schwertrüben werden zur Trennung von Erz und Gangart verwendet, wobei das zu trennende Gut in einen schwimmenden und einen sinkenden Anteil aufgetrennt wird. Die Dichteeinstellung der Schwertrüben erfolgt durch Eintragen fein verteilter Feststoffzusätze in Wasser. Als Feststoffzusätze sind Ferrosilicium, ferner PbS (Galenit), Eisensulfat (Magnetit), Bariumsulfat, Quarzsand, Pyrit im Gebrauch.

Aus der US-A-2266840 ist eine Vorrichtung und ein Verfahren zur Bestimmung des Prozentsatzes eines Minerals wie Kohle in einem Mineralprodukt, das Kohle und Asche in verschiedenen Mengen enthalten kann, bekannt. Die Erfindung ist auch auf andere Minerale wie Erze in einem Mineralgemisch übertragbar, wobei als Trennflüssigkeit Zinkchlorid genannt ist.

Die JP-A-59-196760 betrifft die Klassifizierung von Dichtungen aus Polypropylen nach dem Kristallisationsgrad über die Dichtetrcnnung in alkoholischen Lösungen mit Dichten von 0,893, 0,892 und 0,89 nach dem Schwimm/Sink-Verfahren.

Die EP-A-469904 offenbart die Trennung von heterogenem plastikmaterial in homogene Fraktionen, insbesondere PET und PVC. Als Quellmittel für das Plastikmaterial werden Lösungsmittel wie Ketone, DMF, chlorierte Lösungsmittel eingesetzt, und die Dichtetrennung bei 1 bis 1,1 kg/dm³ erfolgt mit Wasser, Wasser/Glycol, Wasser/NaCl, Wasser/nichtschäumende oberflächenaktive Mittel.

In der DE-A-3800204 wird ein Sortierverfahren für Kunststoffabfälle gemäß schwimm/Sink-Technik beschrieben, wobei mehrere Behälter hintereinander geschaltet werden können. Als Trennmittel werden allgemein wäßrige Salzlösungen und gewisse organische Flüssigkeiten angegeben.

Die DE-A-2900666 betrifft die Dichtetrennung von Kunststoffen mittels hintereinander geschalteter Hydrozyklone. Als Trennmittel der Dichten über 1 werden Natriumchloridlösungen eingesetzt, bei Dichten unter 1 sind es Gemische von Wasser und organischen Flüssigkeiten.

Aus der DE-C-3305517 ist als Schwerflüssigkeit eine wäßrige Alkali- und/oder Erdalkalimetall-metawolframatlösung bekannt, die eine echte Lösung in Wasser darstellt. Diese Lösung eignet sich jedoch nur zur Trennung von Mineralien und Gesteinen, da in Anwesenheit von Metallen wie Fe, Cu, Zn, Sn, Pb, Al, Mg und einer Reihe von organischen Verbindungen eine Zersetzung der Metawolframatlösung zu blauen Trüben erfolgt. Dieser Vorgang ist nicht reversibel, so daß metallhaltige Feststoffgemische mit dieser Lösung nicht getrennt werden können.

Ein Nachteil dieser Verfahren besteht darin, daß der zur Dichteeinstellung verwendete Schwerstoff trotz feinster Verteilung selbst sedimentiert. Das begrenzt auch den Einsatz von Zentrifugalabscheidern zur Beschleunigung des Prozesses insgesamt. Durch die Dichteänderung als Folge der Schwerstoffsedimentation verliert die Trennung an Genauigkeit. Der Ausweg einer ständigen Umwälzung der Schwerflüssigkeit durch Pumpen ist aufwendig und materialverschleißend.

In der US-A-1854107 wird die Trennung von Kohle mittels eines Waschprozesses mit Wasser in einer dafür geeigneten Vorrichtung beschrieben.

Die GB-A-1568749 betrifft die Trennung von gekeimten und ungekeimten Samen gemäß Dichtetrennung mittels wäßriger Zucker- oder Glycerinlösungen in einer bestimmten Vorrichtung.

Die FR-A-2104667 stellt ein mineralisches Analyseverfahren dar mit einer speziellen automatischen Trennvorrichtung.

Aufgabe der vorliegenden Erfindung ist es, eine kontinuierliche Trennung von Feststoffgemischen verschiedener Dichte über einen Dichtebereich von 0,8 bis 2,9 g/cm³ zu ermöglichen und damit sowohl die leistungsfähige Identifizierung der zu trennenden und abgetrennten Produkte zu gewährleisten und zugleich eine technische Möglichkeit zur Durchführung der Trennung bereitzustellen.

Erfindungsgemäß wird die Aufgabe gelöst mit einem Verfahren, bei dem das zerkleinerte und gewaschene Feststoffgemisch mit einer Teilchengröße im Bereich von 0,1 bis 80 mm mit wäßrigen Lösungen von Trennflüssigkeiten unterschiedlicher Dichte in Abstufungen von 0,005 g/cm³ bis 0,1 g/cm³ innerhalb eines ausgewählten Bereiches aus dem Dichtebereich zwischen 0,8 und 2,9 g/cm³ nacheinander in Kontakt gebracht werden und der jeweils aufschwimmende oder absinkende Feststoffanteil nach jeder Stufe abgetrennt wird. Das Verfahren ist dadurch gekennzeichnet, daß die Dichtetrennung in Abstufungen von 0,005 g/cm³ bis 0,1 g/cm³ innerhalb eines ausgewählten Bereiches aus dem Dichtebereich zwischen 0,8 und 2,9 g/cm³ erfolgt, wobei die Trennflüssigkeit im Dichtebereich 1,01 bis 1,16 g/cm³ eine Harnstofflösung ist und/oder die Trennflüssigkeit im Dichtebereich 1,01 bis 2,9 eine stabilisierte Schwerflüssigkeitslösung ist, bestehend aus
(1) einem Alkali- oder Erdalkalisalz von Metawolframat mit einer Konzentration im Bereich 1 bis 80 Masse-%, bezogen auf die Gesamtmasse, und
(2) einem Oxidationsmittel, ausgewählt aus der Gruppe Chromat, Dichromat, Permanganat, Nitrat, Persäuren, Perester, mit einer Konzentration von 0,05 bis 0,5 Masse-%, bezogen auf die Menge an Natriummetawolframat.

Bei diesem Verfahren wird in unterschiedlichen Dichtebereichen auch mit unterschiedlichen Trennflüssigkeiten gearbeitet. Eine bevorzugte Trennflüssigkeit im Dichtebereich von 0,8 bis 0,99 ist ein C₁-C₅-Alkanol oder ein Gemisch eines C₁-C₅-Alkanols mit Wasser. Bevorzugte Alkanole sind Methanol, Ethanol, Propanol und Isopropanol.

Mit der Trennflüssigkeit im Dichtebereich von 1,01 bis 1,16 g/cm³ , einer Harnstofflösung, können vorzugsweise Kunststoffe wie Polystyrol (1,03 bis 1,05 g/cm³) und Acrylnitril-Butadien-Styrol (1,06 bis 1,08 g/cm³) getrennt werden.

Eine weitere Möglichkeit für den Einsatz einer Trennflüssigkeit ist die Verwendung von Magnesiumsulfatlösung für den Dichtebereich 1,01 bis 1,28.

Die erfindungsgemäße Trennflüssigkeit für den Dichtebereich 1,01 bis 2,9 ist eine stabilisierte Schwerflüssigkeit zur Dichtetrennung von metallhaltigen nichtmineralischen Abfallprodukten der Gruppe Kunststoffe, Glas und Elektroschrott und deren Gemischen und besteht aus der oben genannten, stabilisierten wäßrigen Lösung eines Alkali- oder Erdalkalisalzes von Metawolframat mit einer Konzentration im Bereich 1 bis 80 Gew.-%, bezogen auf die Gesamtmasse. Dabei sind bevorzugte Alkalisalze von Metawolframat die Natrium- oder Lithiumsalze, vorzugsweise ist es das Natriummetawolframat. Die genaue Struktur des Natriummetawolframats wird mitunter unterschiedlich angegeben, im allgemeinen jedoch mit Na₆[H₂W₁₂O₄₀]. Für die Zwecke dieser Erfindung kann Natriummetawolframat verwendet werden, bei dem das Verhältnis von Na:W = 6:12 bis 3:12 beträgt, d.h. neben der "reinen" Verbindung können auch andere artverwandte Polyverbindungen ähnlicher Struktur in einem gewissen Anteil vorhanden sein. Entscheidend ist jedoch, daß das eingesetzte Natriummetawolframat mit diesem Anteil eine klare Lösung bildet. Das gleich gilt für Lithium. Als Erdalkalimetall kann Strontium oder Barium verwendet werden.

Ein bevorzugtes Oxidationsmittel ist Kaliumdichromat, Natriumdichromat oder Kaliumpermanganat vom Standpunkt der leichten Verfügbarkeit und von der Wirkung, wobei auch andere wirksame Oxidationsmittel verwendet werden können. H₂O₂ als solches ist kein Oxidationsmittel, das für das erfindungsgemäße Ziel ausreichend ist, da es bekanntermaßen leicht disproportioniert. Es ist bestenfalls geeignet, eine schwachblaue Einfärbung aufzuheben, nicht jedoch ein tiefblaue Trübung auf Dauer zu verhindern.

Das Oxidationsmittel ist in einer Konzentration von 0,05 bis 0,5 Masse-%, bezogen auf die Menge an Natriumwolframat, vorhanden, vorteilhaft in einer Konzentration von 0,1 bis 0,3 Masse-%, bezogen auf die Menge an Natriumwolframat. Bei Konzentrationen unterhalb 0,05 Masse-% tritt eine nicht ausreichende Stabilisierung auf, und Konzentrationen oberhalb 0,5 Masse-% ergeben keine bessere Wirkung.

Die erfindungsgemäße stabilisierte Metawolframatlösung ist überraschenderweise gegenüber metallischen Bestandteilen völlig stabil und zeigt keine Zersetzungseigenschaften wie die unstabilisierte Metawolframatlösung. Letztere ist zwar zur Trennung mineralischer Bestandteile geeignet, zeigt jedoch bei Kontakt mit beispielsweise metallischem Eisen, Aluminium, Zinn usw. sofort eine tiefblaue Eintrübung und ist damit für eine weitere Verwendung als Dichtetrennmittel nicht mehr geeignet. Diese Eintrübung und Zersetzung ist auch im wesentlichen irreversibel.

Da bei technischen Trennprozessen von Abfallprodukten, die weitgehend ein Gemisch von Kunststoffen, Glas und Metall darstellen können, aber auch von bereits gewaschenem und granulierten Kunststoffen metallische Verunreinigungen nicht zu vermeiden sind, ist somit der Einsatz von reinen Metawolframatlösungen zur Dichtetrennung nicht möglich.

Durch die Erfindung wird dieses Problem vollständig gelöst, wobei es besonders vorteilhaft ist, wenn die stabilisierte Lösung von zum Beispiel Natriummetawolframat als Lösung unterschiedlicher Dichte mit Abstufungen von 0,005 bis 0,1 g/cm³ im Dichtebereich 1,01 bis 2,9 g/cm³ vorliegt, vorzugsweise mit Abstufungen von 0,01 bis 0,05 g/cm³. Diese Abstufungen von Natriummetawolframatlösungen können genutzt werden, um ein nach Dichte zu trennendes Feststoffgemisch in diesem Dichtebereich nacheinander damit in Kontakt zu bringen.

Bei dem erfindungsgemäßen Verfahren wird nach dem Kontaktieren des Feststoffgemisches mit einer Trennflüssigkeit jeweils der aufschwimmende oder absinkende Feststoffanteil nach jeder Stufe abgetrennt. Erfindungsgemäß ist es vorteilhaft, wenn das Feststoffgemisch mit den Trennflüssigkeiten unterschiedlicher Dichte in Abstufungen von 0,005 g/cm³ bis 0,1 g/cm³, vorzugsweise 0,05 g/cm³ bis 0,01 g/cm³ innerhalb eines ausgewählten Bereiches aus dem Dichtebereich zwischen 0,8 und 2,9 g/cm³ nacheinander in Kontakt gebracht wird und dann der jeweils absinkende Feststoffanteil nach jeder Stufe abgetrennt wird.

Dabei kann nach einer bevorzugten Ausführungsform der Erfindung dieses Verfahren in Form eines Analyseverfahrens praktisch umgesetzt werden. So ist eine Routineanalytik mit Trennflüssigkeitslösungen mit unterschiedlichen Dichten von 0,05 g/cm³ möglich. Eine höhere Genauigkeit für z.B. eine Erstbewertung eines Feststoffgemisches wird mit Trennflüssigkeitslösungen mit unterschiedlichen Dichten von 0,01 g/cm³ erreicht. Spezielle Aussagen können dann noch mit Trennflüssigkeiten mit unterschiedlichen Dichten von 0,005 g/cm³, z.B. mit einer Natriummetawolframatlösung, getroffen werden. Das bedeutet zum Beispiel für die Routineanalyse eines reinen Kunststoffgemisches, daß dieses nacheinander mit einer Trennflüssigkeit der Dichte 1,05 - 1,10 - 1,15 - 1,20 - 1,25 - 1,30 - 1,35 - 1,40 - 1,45 - 1,50 in Kontakt gebracht wird und jeweils das Sinkprodukt nach jeder Dichtestufe abgetrennt wird. In der Mehrzahl der Fälle wird bereits damit eine für den Normalfall im Aufbereitungsbetrieb ausreichende Genauigkeit erreicht und zugleich ein Schnellanalyseverfahren bereitgestellt.

Das gleiche Analyseverfahren zur Erstbewertung erfordert für den gleichen Dichtebereich 50 Trennschritte, was jedoch bei intensiver Benetzung und der wenig viskosen Trennflüssigkeit, z.B. Natriummetawolframat, in diesem Dichtebereich ebenfalls relativ schnell durchgeführt werden kann. Die Benetzung kann durch Rühren oder Ultraschall erfolgen; bei signifikaten Klebstoff- oder Ölverschmutzungen im Feststoffgemisch kann auch auf organische Benetzungsmittel zurückgegriffen werden, was jedoch im allgemeinen zu vermeiden ist.

Auf diese Weise kann in einer Erstbewertung eines Kunststoff/Glas/Metall-Gemisches dieses vorteilhaft in Dichteabstufungen von 0,01 g/cm³ im Dichtebereich 0,8 bis 0,99 g/cm³ nacheinander mit einer wäßrigen Propanollösung in Kontakt gebracht werden und im Dichtebereich 1,01 bzw. 1,005 bis 2,90 g/cm³ mit einer wäßrigen Natriummetawolframatlösung. Je nach Anfall entsprechender Fraktionen werden diese abgetrennt, gewaschen und getrocknet. Sie können erforderlichenfalls noch anderen analytischen Verfahren unterworfen werden, meist reicht aber die Zuordnung zu den bekannten Kunststoffdichten aus, und es können damit sowohl qualitative als auch exakte quantitative Aussagen getroffen werden. Diese Aussagen reichen aus, um bei der technischen Anwendung des erfindungsgemäßen Verfahrens später die genauen Trennschnitte für die gewünschten abzutrennenden Kunststoffe oder Metalle festzulegen, z.B für die Kunststoffarten nach dem Anwendungsbereich und länder- oder regionsspezifischer Produktion differieren können.

Die Einsatzmenge für das Feststoffgemisch bei einem analytischen Verfahren beträgt etwa 5 bis 50 g, vorzugsweise 10 bis 20g.

Eine bevorzugte Verfahrensvariante besteht darin, daß die Trennflüssigkeiten unterschiedlicher Dichte nacheinander in einen Behälter, der das Feststoffgemisch enthält, eingeführt und nach dem Trennvorgang ergänzt, auf eine neue Dichte eingestellt oder gänzlich abgezogen werden. Diese Verfahrensweise führt zu wesentlichen Einsparungen gegenüber den bisher üblichen Kaskadenverfahren, bei dem ein Kunststoffgemisch nacheinander in mehrere Behälter mit Flüssigkeiten unterschiedlicher Dichte überführt wurde. Besonders vorteilhaft ist das Verbleiben der teilweise mit dem Sinkprodukt abgezogenen restlichen Trennflüssigkeit in dem Trennbehälter und das Einstellen der nächsten Dichtestufe durch Ergänzung mit Trennflüssigkeit entsprechender Dichte.

Wie bereits ausgeführt, kann das Verfahren so durchgeführt werden, daß der aufschwimmende Feststoffanteil nach Kontakt mit der Trennflüssigkeit abgetrennt wird. Die Durchführung des erfindungsgemäßen Verfahrens ist jedoch bevorzugt auch möglich, wenn mit einer hohen Dichte der Schwerflüssigkeitslösung beginnend (alle Feststoffe schwimmen) das jeweils bei der nächst niederen Dichtestufe absinkende Produkt abgetrennt wird.

Bei entsprechender apparativer Gestaltung kann das vorliegende Verfahren auch als technisches Trennverfahren für große anfallende Massen aus dem Recycling von Kunststoffen oder Elektroschrott (einschließlich Glasanteilen) durchgeführt werden. So können beispielsweise Polystyrol, PVC und Polyethylenterephthalat (PET) ohne weiteres mit dem vorliegenden Verfahren technisch sauber getrennt werden, indem nach vorheriger Dichtefraktionsanalyse bestimmte Trennschnitte bei den gewünschten Dichtestufen mit Hilfe der Trennflüssigkeiten, insbesondere einer stabilisierten Natriumetawolframtalösung, gelegt werden und die dabei anfallenden Sinkprodukte als gewünschte Fraktion abgetrennt werden. So können beispielsweise Polystyrol, Polyamide, Polycarbonat, Polyethylenterephthalat, Polyoxymethylen, aber auch verstärkte Kunststoffe, z.B. glasfaserverstärkte Kunststoffe ohne weiteres mit dem vorliegenden Verfahren technisch sauber getrennt werden, indem nach vorheriger Dichtefraktionsanalyse bestimmte Trennschnitte bei den gewünschten Dichtestufen mit Hilfe der Trennflüssigkeit, insbesondere einer stabilisierten Natriummetawolframatlösung, gelegt werden und die dabei anfallenden Sinkprodukte (oder Schwimmprodukte) als gewünschte Fraktion abgetrennt werden. Die Bestimmung des Trennschnittes ist infolge der sehr engen Fraktionierung mit Dichten im Hundertstel- oder Tausendstel-Bereich ohne Schwierigkeiten möglich.

Eine weitere vorteilhafte Ausführungsform des Verfahrens besteht darin, in der Dichte sehr eng zusammenliegende Kunststoffgemische oder sich nach der Dichte überlagernde Kunststoffe als Teil des Feststoffgemisches mit einem entsprechenden Lösungsmittel zu behandeln, das für wenigstens einen darin enthaltenen Kunststoff ein quellendes Lösungsmittel ist und eine Volumenvergrößerung bewirkt, so daß durch die Dichtereduzierung der gequollene oder teilweise gequollene Kunststoff mit Wasser oder mit der Trennflüssigkeit mit einer Abstufung in der Dichte von wenigsten 0,01 g/cm³ in Kontakt gebracht und der aufschwimmende oder absinkende Kunststoffanteil abgetrennt wird. Dadurch wird es möglich, auch solche unklaren Fraktionen aus der normalen Dichtefraktionsanalyse (z.B. Erstbewertung) noch genauer zu bestimmen. Die Lösungsmittel sind entsprechend der Art des Kunststoffes auszuwählen. Ebenso ist es fachgemäß, die ausreichende Quellzeit zu bestimmen.

Die stabilisierte Alkali- oder Erdalkalimetall-metawolframatlösung als Trennflüssigkeit kann über einen Regenerierungsschritt hinsichtlich des verbrauchten Oxidationsmittels einfach regeneriert werden, indem neues Oxidationsmittel hinzugesetzt wird. Eine derartige Regenerierung ist bei der Durchführung des vorliegenden Verfahrens überraschenderweise erst nach längerer Zeit erforderlich, d.h. das zugesetzte Oxidationsmittel behält seine bisher noch nicht vollständig aufgeklärte Wirkung auch nach intensiver Nutzung der Schwerflüssigkeitslösung z.B. über mehrere Monate in noch relativ ausreichender Höhe.

Eine weitere vorteilhafte Ausführungsform des Verfahrens betrifft die Dichtetrennung von Elektroschrott. Unter Elektroschrott wird in bezug auf das vorliegende Verfahren Schrott von Elektrogeräten, Kabelschrott und sogenannter Elektronikschrott (Leiterplatten, Telefone, elektronische Bauteile usw.) verstanden. Mit dem vorliegenden Verfahren kann eine einwandfreie Abtrennung von Kunststoffteilen in Einzelfraktionen, Glas- und Metallfraktionen erreicht werden, wobei selbst verschiedene Metalle wie Aluminium und Kupfer, die klar voneinander verschiedene Dichten aufweisen, getrennt als Fraktion erhalten werden können.

Die Teilchengröße für das vorliegende Verfahren beträgt 0,1 bis 80 mm. Der bevorzugte Bereich der Teilchengröße liegt bei 1 bis 8 mm. Bei Teilchengrößen unterhalb 0,1 mm bestehen Probleme hinsichtlich der Sinkgeschwindigkeit im Trennmedium, und Teile größer als 80 mm Durchmesser d.h. mit Flächen bis zu 10 cm² können zwar generell abgetrennt werden, bringen jedoch Behinderungen beim Austrag aus den Trenngefäßen mit sich.

Die Erfindung betrifft auch eine Vorrichtung zur Naß-Trennung von Feststoffgemischen verschiedener Dichte gemäß Patentanspruch 12. Bei dieser Vorrichtung wird die Trennkammer mit einer Trennflüssigkeit gefüllt, wobei die Dichte der Trennflüssigkeit zu Beginn des Trennprozesses beispielsweise so eingestellt ist, daß alle Bestandteile des Aufgabegutes schwimmen. Ein Stoffgemisch, bestehend aus zerkleinertem, in der Trennflüssigkeit nicht löslichem Material mit einer Teilchengröße von etwa 1 bis 5 mm, das ein Gemisch aus Kunststoffen und Metallen darstellt, wird in die Trennkammer eingefüllt. Nach der Benetzung des Stoffgemisches durch Rühren oder Ultraschall oder eine andere übliche Weise erfolgt die Trennung des Materials durch Schwerkraft innerhalb kurzer Zeit. Die sedimentierte Sinkfraktion wird durch Öffnung einer Bodenklappe in die darunter befindliche Absetzkammer mit einem Teil der Trennflüssigkeit befördert. Diese Beförderung kann durch ein zusätzliches Rührelement oder eine andere geeignete Einrichtung, wie z.B. eine schiefe Ebene unterstützt werden.

Die in der Absetzkammer befindliche Sinkfraktion wird von der restlichen Trennflüssigkeit über ein Sieb oder eine Zentrifuge entfernt, gewaschen und anschließend getrocknet. Die dabei anfallende Trennflüssigkeit wird dem Kreislauf wieder zugeführt, ebenso das Waschwasser, gegebenenfalls nach Aufkonzentrierung. Der in der Trennkammer befindlichen Schwimmfraktion wird neue Trennflüssigkeit zugeführt und eine neue Dichte eingestellt. Die gegebenenfalls dabei anfallende neue Sinkfraktion wird in gleicher Weise wie zuvor beschrieben abgetrennt.

Das Verfahren kann vorteilhaft in einer Vorrichtung durchgeführt werden, bei der sich mehrere sektorförmige Absetzkammern unter einer zylindrischen Trennkammer befinden. Es kann aber auch mit einer kegelförmigen Trennkammer und nur einer darunter angeordneten Absetzkammer durchgeführt werden.

Für analytische Zwecke ist es vorteilhaft, wenn die Trennvorrichtung bei gleichbleibender Temperatur betrieben wird, d.h. ein durch einen Thermostat gesteuertes Medium wird z.B in einen Mantel um die Vorrichtung geleitet und hält eine konstante Temperatur.

Der Ablauf des Trennvorganges wird zweckmäßig mikroprozeßgesteuert. Diese Art der Steuerung ermöglicht unter anderem das Einstellen der Dichte der Trennflüssigkeit durch Zudosieren einer Hilfsflüssigkeit zu der Trennflüssigkeit und gewährleistet durch Genauigkeit der Dosierung eine hohe Trennschärfe. Dabei wird über eine Dichtemessung der Trennflüssigkeit die Menge der zu dosierenden Hilfsflüssigkeit bestimmt und diese in vorbestimmter Menge der Haupt-Trennflüssigkeit zugefügt. Die Hilfsflüssigkeit kann Wasser oder dieselbe Trennflüssigkeit mit einer anderen Dichte sein.

In einer weiteren Ausführungsform wird die Trennflüssigkeit in jeweils vorgegebener Dichte zu dem nahezu flüssigkeitsfreien zu trennenden Material in die Trennkammer eingeführt, wobei die Flüssigkeiten unterschiedlicher Dichte in getrennten Kreisläufen geführt werden und sowohl durch verdünnen mit Hilfsflüssigkeit als auch durch Aufkonzentrieren der Trennflüssigkeit auf eine gewünschte Dichte eingestellt werden.

Die Trennzeiten selbst sind nicht kritisch und können zwischen 0,1 bis 100 Sekunden liegen, vorzugsweise 0,5 bis 30 Sekunden, insbesondere 0,5 bis 10 Sekunden.

Die Erfindung wird nachstehend durch Ausführungsbeispiele näher erläutert. In der dazugehörigen Zeichnung bedeuten
- Fig. 1: Diagramm einer Dichtefraktionierung des Kunststoffanteiles aus Elektroschrott
- Fig. 2a: Diagramm der Dichtefraktionsanalyse von Polystyrol-Kunststoffen mit der Auflösung 0,05 g/cm³
- Fig. 2b: Diagramm der Dichtefraktionsanalyse von Polystyrol-Kunststoffen mit der Auflösung 0,01 g/cm³
- Fig. 3: Säulendiagramm einer Dichtefraktionsanalyse eines Aluminium-Kunststoff-Gemisches
- Fig. 4: Säulendiagramm einer Dichtefraktionsanalyse eines Aluminium-Kupfer-Kunststoff-Gemisches
- Fig. 5: Säulendiagramm einer Dichtefraktionsanalyse eines Kunststoff-Gemisches aus Verpackungsmaterialien (Becher)
- Fig. 6: Dichtefraktionsanalyse nach den Hauptbestandteilen von Elektroschrott (Übersichtsanalyse)

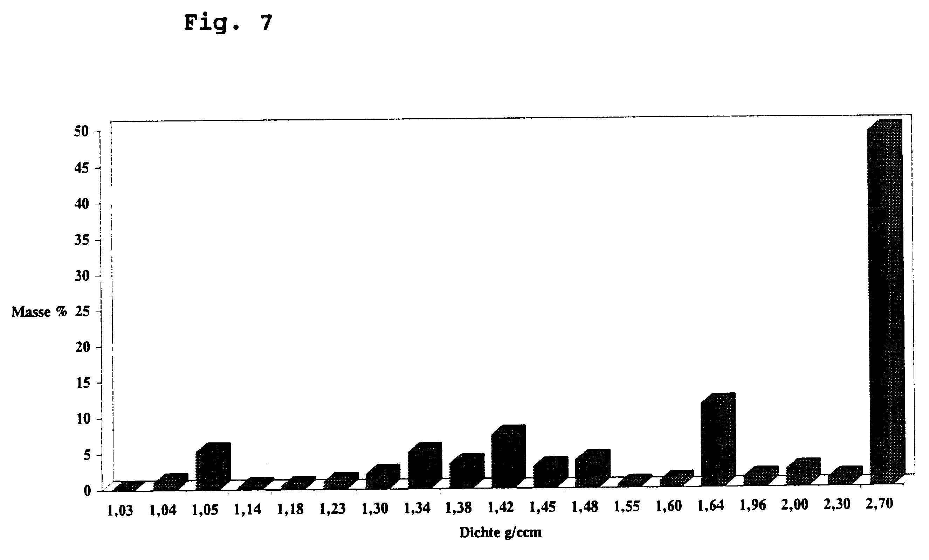

- Fig. 7: Säulendiagramm der Dichtefraktionsanalyse nach allen Bestandteilen einer Elektroschrott-Probe mit der Dichteauflösung 0,01 g/cm³
- Fig. 8: Seitenansicht einer ersten Ausführungsform der Vorrichtung
- Fig. 9: Schnittansicht nach Fig. 8 in der Ebene a-a
- Fig. 10: Seitenansicht einer zweiten Ausführungsform der Vor richtung
- Fig. 11: Draufsicht nach Fig. 10

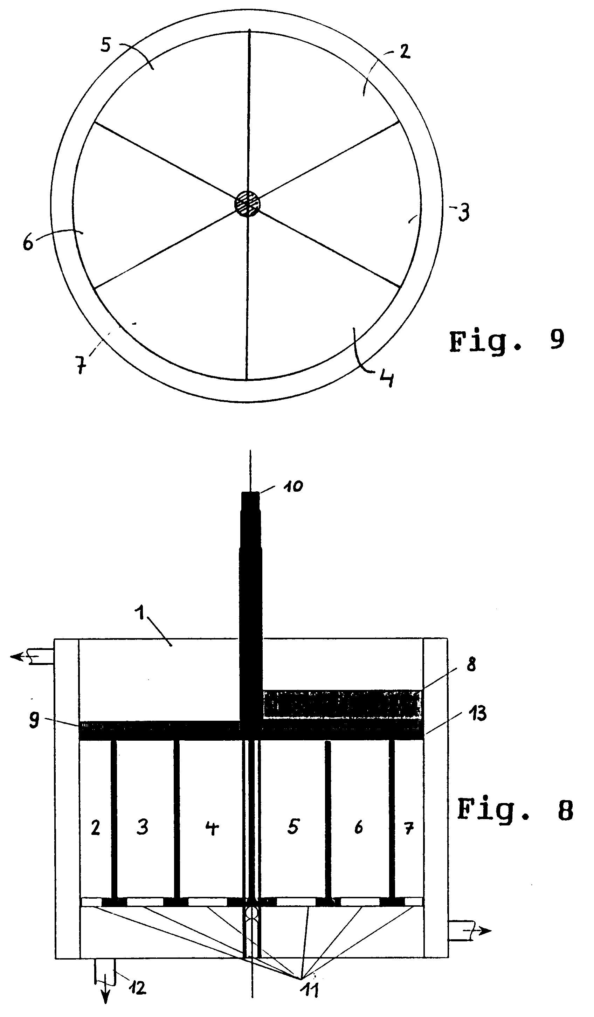

Bei einer ersten Ausführungsform der Vorrichtung gemäß Fig. 8 und 9 besteht die Trennkammer 1 aus einem Rotationskörper in Form eines Zylinders. Dieser ist durch zwei gegeneinander verschiebbare Scheiben 9 und 13 von darunter befindlichen Absetzkammern 2 bis 7 getrennt, wobei die Scheiben eine Öffnung aufweisen, die nicht größer ist als die Öffnung jeder Absetzkammer zu der darüber befindlichen Trennkammer. In einer besonderen Ausführungsform kann über einen zentrischen Rotor 10 angetriebener, sich über die Scheibe in der Trennkammer bewegender Schaber 8 zur vollständigen Entfernung der Sinkfraktion aus der Trennkammer angeordnet sein. Die Absetzkammern können über Öffnungen 11 am Boden oder in Bodenebene entleert werden. Über die Rohrleitung 12 kann Trennflüssigkeit abgezogen werden.

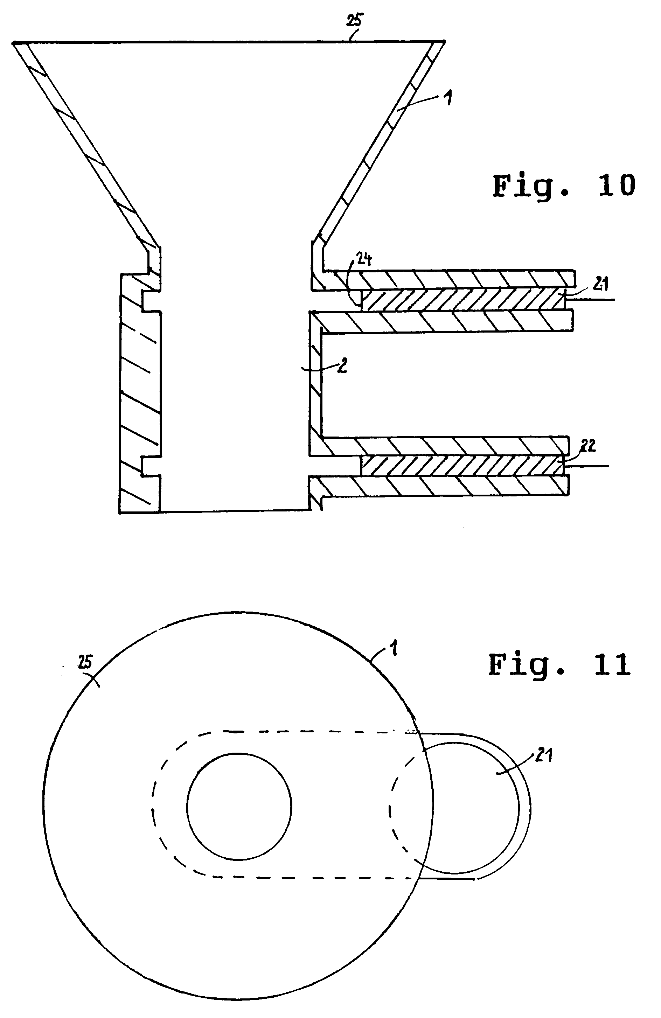

Nach einer zweiten Ausführungsform der Vorrichtung gemäß Fig. 10 und 11 besteht diese aus einem kegelförmigen Rotationskörper als Trennkammer 1, die durch einen waagerecht angeordneten Schieber 21 von der darunter befindlichen Absetzkammer 2 getrennt ist. Der Schieber kann auch mit dem Schließende 24 winklig nach unten geneigt sein. Die Trennkammer 1 weist an ihrer Oberseite wenigstens eine Beschickungsöffnung 25 auf. Ein weiterer Schieber 22 ist in der darunter befindlichen Absetzkammer 2 in deren unterem Abschnitt angeordnet, der zu einem Auslaß unterhalb des Schiebers 22 führt.

Die Arbeitsweise dieser Vorrichtung erfolgt derart, daß nach Aufgabe der zu trennenden Feststoffmischung über die Beschickungsöffnung 25 in die Trennkammer 1 die Trennflüssigkeit ebenfalls über die Beschickungsöffnung 25 eingebracht wird. Dabei ist der Schieber 21 geschlossen. Nach einer kurzen Trennzeit von etwa 5 Sekunden ist eine Trennung in Schwimmfraktion und Sinkfraktion erfolgt. Der Schieber 21 wird geöffnet, die Sinkfraktion mit einem Teil der Trennflüssigkeit in die Absetzkammer 2 abgelassen und der Schieber 21 wieder geschlossen. Während dieses Vorgangs ist der Schieber 22 geschlossen. Das Gemisch wird aus der Absetzkammer 2 durch Ziehen des Schiebers 22 entfernt, anschließend die verbliebene Trennflüssigkeit durch Filtration oder Zentrifugieren abgezogen und die feste Fraktion gewaschen und getrocknet. In der Zwischenzeit ist die Trennkammer wieder neu mit Trennflüssigkeit gewünschter Dichte aufgefüllt worden, und der Trennvorgang wird wiederholt.

### Beispiel 1

Das Sinkprodukt aus der Wasser-Schwimm-Sink-Sortierung von Kunststoffabfällen (Hohlkörper) wurde als Ausgangsprodukt für dieses Beispiel eingesetzt. Es wurden drei äquivalente Proben von je 10 g Einwaage mit einer Korngröße von 0,315 bis 8,0 mm verwendet. Die Trennung des Kunststoffgemisches erfolgte in der Weise, daß das in einer Trennkammer befindliche Gemisch nacheinander mit jeweils 250 ml einer Natriummetawolframatlösung mit Dichteunterschieden von 0,05 g/cm³ in Kontakt gebracht wurde im Dichtebereich von 1,05 bis 1,5 g/cm³. Es wurden somit 12 Dichtetrennstufen durchgeführt, einschließlich der Trennung mit Wasser und mit Alkohol/Wasser. Die Fraktionen mit einem Dichteunterschied von 0,05 g/cm³ wurden abgetrennt, gewaschen und getrocknet. Die Auswertung der Dichtespektren ergab einen Anteil von 0,5 % Polyolefine, 9 % Polystyrol, 89 % PVC/PET und 2 % einer Restfraktion, bestehend aus Aluminium und Aluminium-Kunststoffverbunden. Die Werte der 3 Proben lagen sehr dicht beieinander, so daß der Fehler dieser Analyse als sehr gering anzusehen ist.

### Beispiel 2

Es wurden 20 g eines vorgetrennten Aluminium-Kunststoff-Gemisches gewaschen und einer Fraktionierung mit Natriummetawolframatlösungen unterschiedlicher Dichte mit Abstufungen von 0,05 g/cm³ im Dichtebereich 0,05 bis 2,70 g/cm³ unterworfen. Das eingesetzte Gemisch hatte eine Korngröße von 0,315 bis 3,0 mm.

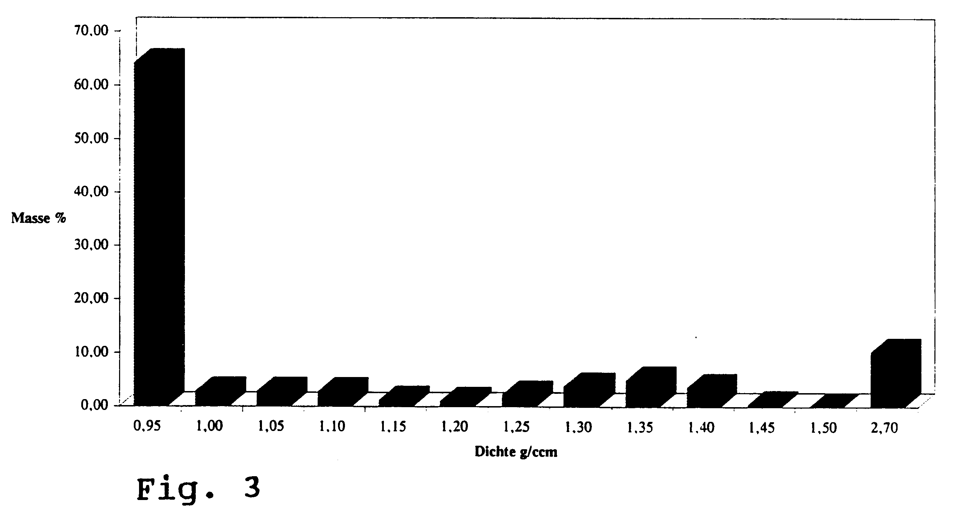

Gemäß Fig. 3 wird ersichtlich, daß als Isolier- und Mantelwerkstoffe in diesem Beispiel überwiegend Polyethylen und untergeordnet PVC/Elastomer vorhanden ist. Die Ausbeute an gewonnenem Aluminium liegt bei 10 Masse-% (bezogen auf die Einwaagemenge von 10 g Gemisch).

### Beispiel 3

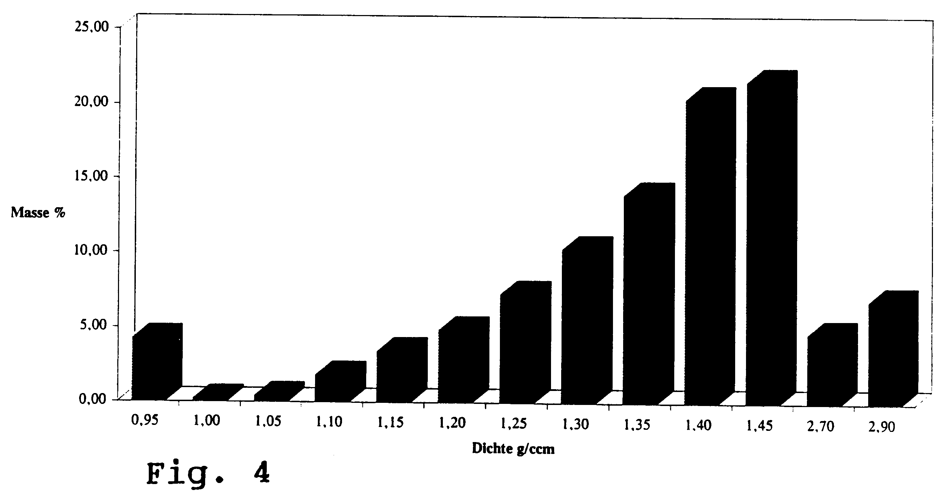

Es wurden 20 g eines vorgetrennten Aluminium-Kupfer-Kunststoff-Gemisches aus der Gemischtkabelaufbereitung gewaschen und einer Fraktionierung mit Natriummetawolframatlösung unterschiedlicher Dichte mit Abstufungen von 0,05 g/cm³ im Dichtehereich 0,95 bis 2,90 g/cm³ unterworfen. Aus Fig. 4 wird ersichtlich, daß als Isolier- und Mantelwerkstoffe in diesem Beispiel überwiegend PVC/Elastomer und untergeordnet Polyethylen vorhanden sind. Die Ausbeute an gewonnenem Aluminium liegt bei 4,7 Masse-% und an gewonnenem Kupfer bei 7 Masse-% (bezogen auf die Einwaage von 20 g Gemisch).

### Vergleichsbeispiel 1

Es wurde eine Modellmischung, bestehend aus 30 Gewichts-% Polystyrol, 20 Gewichts-% Styrol-Acrylnitril-Polymeres (SAN) und jeweils 25 Gewichts-% Acrylnitril-Butadien-Stryrol (ABS) (I) und ABS (II) unterschiedlicher Hersteller einer Dichtefraktionsanalyse unterworfen. Es wurden zwei äquivalente Proben von je 5 g dieses Gemisches mit einer Korngröße von 1 bis 5 mm genommen (Probe A und Probe B).
a) Die Probe A wurde, ähnlich wie in den anderen Beispielen, mit Trennflüssigkeiten in Kontakt gebracht, wobei diese Lösungen folgende Dichten hatten

| Stufe | Trennflüssigkeit | Dichte [g/cm³] |
|---|---|---|
| 1. | Wasser | 1,00 |
| 2. | wäßr. Na-metawolframatlösung | 1,05 |
| 3. | " | 1,10 |
| 4. | " | 1,15 |

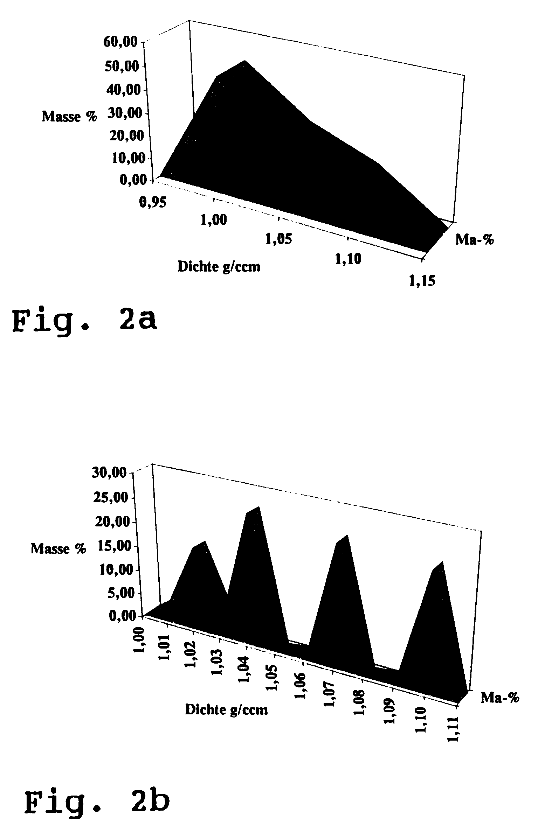

Die bei der jeweiligen Stufe angefallene Sinkfraktion wurde abgetrennt, gewaschen, getrocknet und deren Masse bestimmt. Man erhielt eine prozentuale Verteilung der Massen bei den einzelnen Dichtestufen gemäß Fig. 2a.
b) Die Probe B wurde, ähnlich wie in den anderen Beispielen, mit Trennflüssigkeiten in Kontakt gebracht, wobei diese Lösungen folgende Dichten hatten

| Stufe | Trennflüssigkeit | Dichte [g/cm³] |
|---|---|---|
| 1. | Wasser | 1,00 |
| 2. | wäßr. Na-metawolframatlösung | 1,01 |
| 3. | " | 1,02 |
| 4. | " | 1,03 |
| 5. | " | 1,04 |
| 6. | " | 1,05 |
| 7. | " | 1,06 |
| 8. | " | 1,07 |
| 9. | " | 1,08 |
| 10. | " | 1,09 |
| 11. | " | 1,10 |
| 12. | " | 1,11 |

Die bei der jeweiligen Stufe angefallene Sinkfraktion wurde abgetrennt, gewaschen, getrocknet und deren Masse bestimmt. Man erhielt eine prozentuale Verteilung der Massen bei den einzelnen Dichtestufen gemäß Fig. 2b.

Aus diesem Beispiel ist ersichtlich, daß die mit Dichteabstufungen von 0,05 g/cm³ erreichten Trennergebnisse nicht ausreichen, das Kunststoffgemisch genau zu charakterisieren. Erst eine Auflösung mit Dichten von 0,01 g/cm³ zeigt Maxima bei 1,02 - 1,04 - 1,07 - 1,10 g/cm³, die auf das Vorhandensein unterschiedlicher Kunststoffe (SAN, PS, ABSI, ABSII) hinweisen. Damit war eine nahezu hundertprozentige Sortenreinheit nach der Auftrennung dieses Gemisches erzielt.

Die Fraktionierung erfolgte erst mit Natriummetawolframatlösungen unterschiedlicher Dichte mit Abstufungen von 0,05 g/cm³. Die Ergebnisse sind in Fig. 11 und 12 aufgeführt. Es zeigt sich, daß keine vollständige Auftrennung der Modellmischung erzielt werden konnte.

Die gleiche Modellmischung wurde anschließend mit Natriummetawolframatlösung mit Dichteabstufungen von 0,01 g/cm³ untersucht dabei wurde eine nahezu hundertprozentige Sortenreinheit nach der Auftrennung dieses Gemisches erzielt. Die Ergebnisse sind in Fig. 13 und 14 aufgeführt.

### Beispiel 4

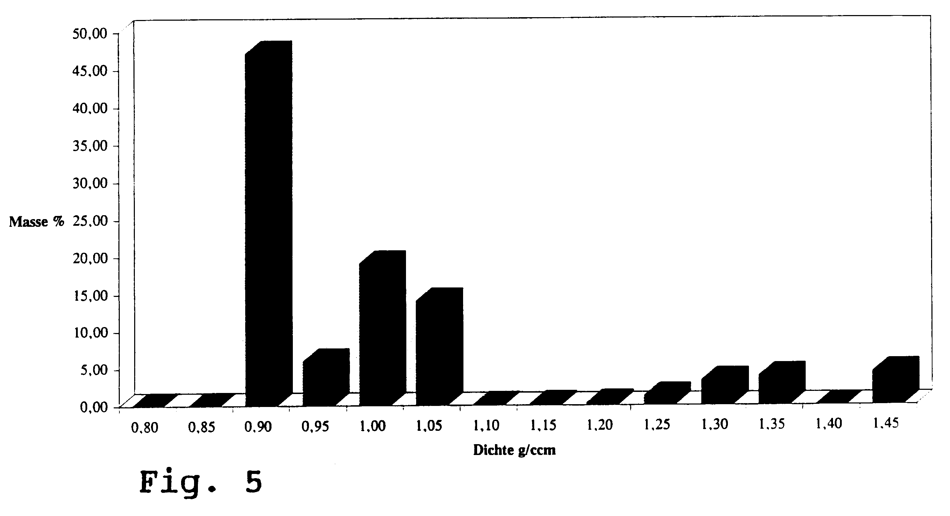

Es wurden 500 g eines handsortierte Kunststoffverpackungen (Becher) mit einer Korngröße von 0,315 bis 8,0 mm eingesetzt. Die Fraktionierung des Gemisches erfolgte mit einer Natriummetawolframatlösung beginnend mit der Dichte 1,45 g/cm³. Die Fraktionierung wurde in Richtung fallender Dichte bis zur Dichte 1,01 durchgeführt und danach mit Wasser bzw. einer Alkohol-Wasser-Lösung bis zu einer Dichte von 0,80 g/cm³. Dabei wurden die erhaltenen Fraktionen gewaschen, getrocknet und gravimetrisch bestimmt. Die Auswertung erfolgte über einen Computer und ergab die aus Fig. 5 ersichtliche Kunststoffverteilung.

### Beispiel 5

Zu Bestimmung der Trennbarkeit und der Wertstoffanteile aus Elektroschrott (Leiterplatten, Steckverbindungen) wurde eine erfindungsgemäße Dichtefraktionsanalyse durchgeführt. Die Korngröße des Probenmaterials betrug 0,2 bis 2,0 mm.

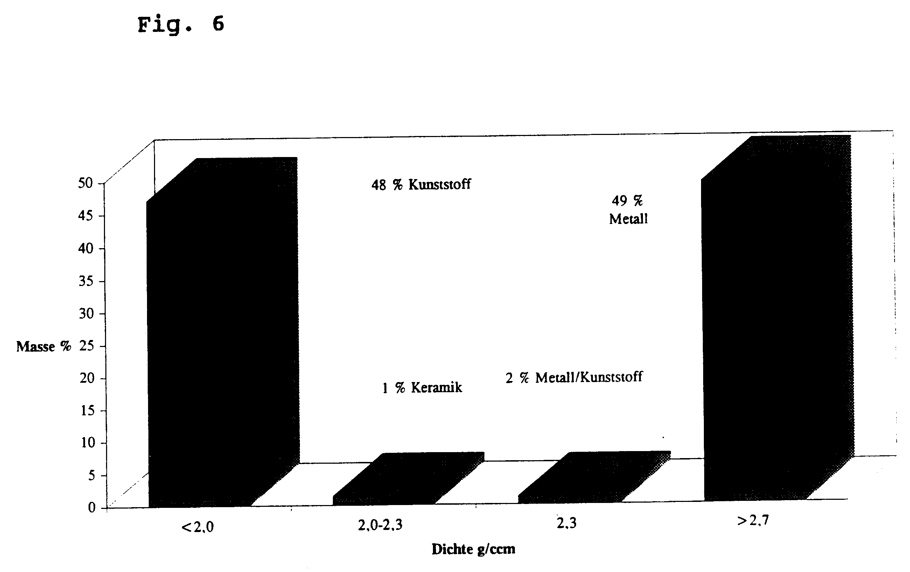

Es wurden 15 g des zerkleinerten Elektroschrotts in die Trennkammer eingebracht, wobei eine Fraktionierung mit fallender Dichte durchgeführt wurde, beginnend mit einer Dichte von 2,7 g/cm³ und endend mit einer Dichte von 1,03 g/cm³. Bei der Dichte von 2,7 g/cm³ erfolgte die Metall/Kunststoff-Trennung, wobei 7,33 g (49 Gewichts-%) Metalle abgetrennt wurden. Weiter Probenbestandteile wurden im Dichtebereich 2,3 bis 2,7 g/cm³ (Metall-Kunststoff-Verbunde, 2 Masse-%) und von 2,0 bis 2,3 g/cm³ (Keramik, 1 Masse-%) abgetrennt. Eine Übersicht der Probenbestandteile wird in Fig. 6 ausgewiesen.

### Beispiel 6

Zu Bestimmung der Trennbarkeit und der Wertstoffanteile aus Elektroschrott (Leiterplatten) wurde eine erfindungsgemäße Dichtefraktionsanalyse durchgeführt. Die Korngröße des Probenmaterials betrug 0,5 bis 3,0 mm.

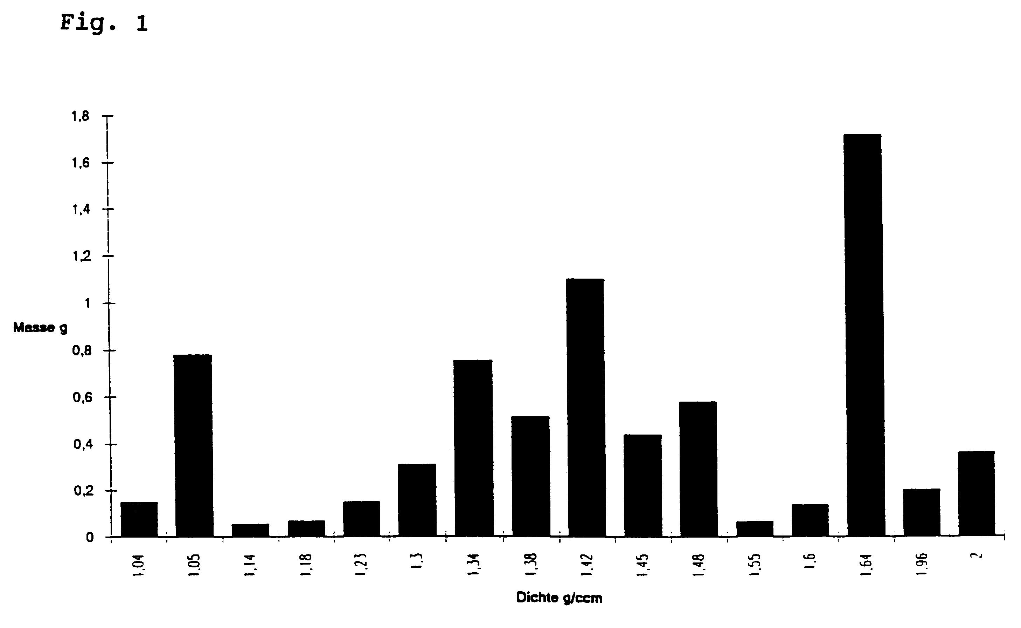

Es wurden 15 g des zerkleinerten Elektroschrotts in die Trennkammer eingebracht, wobei eine Fraktionierung mit fallender Dichte durchgeführt wurde, beginnend mit einer Dichte von 2,7 g/cm³ und endend mit einer Dichte von 1,045 g/cm³. Bei der Dichte von 2,7 g/cm³ erfolgte die Trennung von Metallen und leichteren Bestandteilen einschließlich Aluminium, wobei 7,507 g (50,59 Gewichts-%) Metalle abgetrennt wurden. Die Ergebnisse der Kunststofffraktionierung nach der Dichte erfolgten ähnlich wie im Beispiel 4. Eine stoffliche Zuordnung der Fraktionen wurde mit Hilfe der Pyrolyse-Gaschromatografie durchgeführt. Die grafische Darstellung für die Fraktionen unterhalb der Dichte 2,0 ist aus der Fig. 1 zu entnehmen.

## Patentansprüche

1. Verfahren zur Trennung von Feststoffgemischen verschiedener Dichte durch In-Kontakt-bringen eines zerkleinerten Feststoffgemisches, dessen Teilchengröße von 0,1 bis 80 mm beträgt, mit wäßrigen Lösungen von Trennflüssigkeiten unterschiedlicher Dichte und Abtrennung des jeweils aufschwimmenden oder absinkenden Feststoffanteiles nach jeder Stufe, dadurch gekennzeichnet, daß die Dichtetrennung in Abstufungen von 0,005 g/cm³ bis 0,1 g/cm³ innerhalb eines ausgewählten Bereiches aus dem Dichtebereich zwischen 0,8 und 2,9 g/cm³ erfolgt, wobei die Trennflüssigkeit im Dichtebereich 1,01 bis 1,16 g/cm³ eine Harnstofflösung ist und/oder die Trennflüssigkeit im Dichtebereich 1,01 bis 2,9 eine stabilisierte Schwerflüssigkeitslösung ist, bestehend aus
(1) einem Alkali- oder Erdalkalisalz von Metawolframat mit einer Konzentration im Bereich 1 bis 80 Masse-%, bezogen auf die Gesamtmasse, und
(2) einem Oxidationsmittel, ausgewählt aus der Gruppe Chromat, Dichromat, Permanganat, Nitrat, Persäuren, Perester, mit einer Konzentration von 0,05 bis 0,5 Masse-%, bezogen auf die Menge an Natriummetawolframat.

2. Verfahren nach Anspruch 1, dadurch gekennzeichnet, daß die Trennflüssigkeit zur Trennung von nichtmineralischen metallhaltigen Feststoffgemischen eingesetzt wird.

3. Verfahren nach Anspruch 1 oder 2, dadurch gekennzeichnet, daß die Trennflüssigkeiten unterschiedlicher Dichte nacheinander in einen Behälter, der das Feststoffgemisch enthält, eingeführt, nach dem Trennvorgang ergänzt und auf eine neue Dichte eingestellt oder gänzlich abgezogen werden.

4. Verfahren nach einem der Ansprüche 1 bis 3, dadurch gekennzeichnet, daß der absinkende Feststoffanteil nach Kontakt mit der Trennflüssigkeit abgetrennt wird.

5. Verfahren nach Anspruch 1, dadurch gekennzeichnet, daß nach einer groben Vortrennung in der Dichte eng zusammenliegende Kunststoffe oder sich hinsichtlich der Dichte überlagernde Kunststoffe als Teil des Feststoffgemisches mit einem Lösungsmittel behandelt werden, das für wenigstens einen darin enthaltenen Kunststoffe ein quellendes Lösungsmittel ist und bei diesem Kunststoff eine Volumenvergrößerung bewirkt, und anschließend der durch die Dichtereduzierung gequollene oder teilweise gequollene Kunststoff mit Wasser oder mit der Trennflüssigkeit mit einer Abstufung in der Dichte von wenigstens 0,01 g/cm³ in Kontakt gebracht und der aufschwimmende oder absinkende Kunststoffanteil abgetrennt wird.

6. Stabilisierte Schwerflüssigkeit zur Dichtetrennung von metallhaltigen nichtmineralischen Abfallprodukten der Gruppe Kunststoffe, Glas und Elektroschrott und deren Gemischen, bestehend aus einer wäßrigen Lösung
(1) eines Alkali- oder Erdalkalisalzes von Metawolframat mit einer Konzentration im Bereich 1 bis 80 Masse-%, bezogen auf die Gesamtmasse, und
(2) einem Oxidationsmittel, ausgewählt aus der Gruppe Chromat, Dichromat, Permanganat, Nitrat, Persäuren, Perester, mit einer Konzentration von 0,05 bis 0,5 Masse-%, bezogen auf die Menge an Natriumwolframat.

7. Schwerflüssigkeit nach Anspruch 6, dadurch gekennzeichnet, daß das Alkalisalz Natrium oder Lithium ist, vorzugsweise Natrium.

8. Schwerflüssigkeit nach Anspruch 6, dadurch gekennzeichnet, daß das Oxidationsmittel Kaliumdichromat, Natriumdichromat oder Kaliumpermanganat ist.

9. Schwerflüssigkeit nach Anspruch 6 bis 8, dadurch gekennzeichnet, daß sie als Lösung unterschiedlicher Dichte mit Abstufungen von 0,005 bis 0,1 g/cm³ im Dichtebereich 1 bis 2,9 g/cm³ vorliegt, vorzugsweise mit Abstufungen von 0,01 bis 0,05 g/cm³.

10. Vorrichtung zur Naß-Trennung von Feststoffgemischen verschiedener Dichte, gekennzeichnet durch einen Rotationskörper mit einer Trennkammer (1), die durch zwei gegeneinander verschiebbare Scheiben (9) und (13) von darunter befindlichen Absetzkammern (2) bis (7) getrennt ist, wobei die Scheiben eine Öffnung aufweisen, die nicht größer ist als die obere Öffnung von jeder Absetzkammer;
gegebenenfalls einen Rotor (10) mittig in dem Rotationskörper, wobei der Rotor mit einem Schaber (8) fest verbunden ist;
Bodenklappen in den Absetzkammern (2) bis (7).

## Claims

1. Process for separating solids mixtures of differing density through the bringing of a comminuted solids mixture, whose particle size ranges from 0.1 to 80 mm, into contact with aqueous solutions of separating liquids of differing density and separation of the floating or sinking solids component after each stage, characterized in that the density separation is effected in steps of 0.005 g/cm³ to 0.1 g/cm³ within a selected region of the density range of 0.8 to 2.9 g/cm³, the separating liquid in the density range of 1.01 to 1.16 g/cm³ being a urea solution and/or the separating liquid in the density range of 1.01 to 2.9 being a stabilized heavy-medium solution, comprising
(1) an alkaline or alkaline-earth salt of dihydrogendodecawolframate having a concentration in the region of 1 to 80% by weight relative to the total mass, and
(2) an oxidant, selected from the chromate, dichromate, permanganate, nitrate, peracids, perester group, having a concentration of 0.05 to 0.5% by weight relative to the quantity of sodium dihydrogendodecawolframate.

2. Process according to claim 1, characterized in that the separating liquid is used to separate non-mineral, metal-containing mixtures of solids.

3. Process according to claim 1 or 2, characterized in that the separating liquids of differing density are successively introduced into a container, which contains the solids mixture, and after the separation process are supplemented and adjusted to a new density or completely removed.

4. Process according to one of claims 1 to 3, characterized in that the sinking solids component is removed after contact with the separating liquid.

5. Process according to claim 1, characterized in that, after a coarse preliminary separation, plastics whose densities lie close together or are superimposed are treated as part of the solids mixture with a solvent, which for at least one of the plastics materials contained therein is a swelling solvent and effects an increase in the volume of said plastics material, and then the plastics material, which as a result of the reduction in density has swollen or partially swollen, is brought into contact with water or with the separating liquid having a gradation in density of at least
0.01 g/cm³ and the floating or sinking plastics component is removed.

6. Stabilized heavy medium for the density separation of metal-containing, non-mineral waste products belonging to the group of plastics, glass and electrical scrap and mixtures thereof, comprising an aqueous solution of
(1) an alkaline or alkaline-earth salt of dihydrogendodecawolframate having a concentration in the region of 1 to 80% by weight relative to the total mass, and
(2) an oxidant, selected from the chromate, dichromate, permanganate, nitrate, peracids, perester group, having a concentration of 0.05 to 0.5% by weight relative to the quantity of sodium wolframate.

7. Heavy medium according to claim 6, characterized in that the alkaline salt is sodium or lithium, preferably sodium.

8. Heavy medium according to claim 6, characterized in that the oxidant is potassium dichromate, sodium dichromate or potassium permanganate.

9. Heavy medium according to claims 6 to 8, characterized in that it is present as a solution of differing density in steps of 0.005 to 0.1 g/cm³ in the density range of 1 to 2.9 g/cm³, preferably in steps of 0.01 to 0.05 g/cm³.

10. Device for the wet separation of solids mixtures of differing density, characterized by a rotational body having a separating chamber (1), which is separated from settling chambers (2) to (7) situated below by two disks (9) and (13) which are displaceable relative to one another, the disks having an opening which is not larger than the top opening of each settling chamber;
possibly a rotor (10) centrally in the rotational body, the rotor being firmly connected to a scraper (8);
bottom flaps in the settling chambers (2) to (7).

## Revendications

1. Procédé de séparation de mélanges de matières solides ayant différentes masses volumiques, par la mise en contact d'un mélange des matières solides et fragmentées, dont la grosseur des particules ou fragments se situe entre 0,1 et 80 mm, avec des solutions aqueuses de liquides de séparation (ou liquides séparateurs) de différentes masses volumiques et séparation des fractions de matières solides qui à chaque fois flottent ou tombent au fond, après chaque étape, procédé caractérisé en ce que la séparation en fonction de la masse volumique est réalisée en des gradations de 0,005 g/cm³ jusqu'à 0,1 g/cm³ à l'intérieur d'un domaine choisi dans le domaine de la masse volumique compris entre 0,8 et 2,9 g/cm³, le liquide séparateur étant une solution d'urée dans le domaine des masses volumiques de 1,01 à 1,16 g/cm³ et/ou le liquide séparateur étant une solution liquide lourde (liquide dense) stabilisée que l'on utilise dans le domaine de densité allant de 1,01 à 2,9, cette solution consistant en :
(1) un sel alcalin ou alcalino terreux de type méta tungstate présent en une concentration se situant dans le domaine de 1 à 80% en masse, par rapport à la masse totale et
(2) un agent oxydant, choisi dans l'ensemble constitué par du chromate, du dichromate, du permanganate, du nitrate, des peracides, des peresters, présent en une concentration de 0,05 à 0,5 en masse, par rapport à la quantité de méta tungstate de sodium.

2. Procédé selon la revendication 1, caractérisé en ce que l'on utilise le liquide séparateur pour séparer les constituants de mélanges de matières solides non minérales contenant du métal.

3. Procédé selon la revendication 1 ou 2, caractérisé en ce que l'on introduit des fractions de liquide séparateur ayant chacune une masse volumique différente, successivement dans un récipient contenant le mélange des matières solides, on complète le liquide après l'opération de séparation et l'on ajuste à une nouvelle masse volumique ou bien on l'enlève complètement.

4. Procédé selon l'une des revendications 1 à 3, caractérisé en ce qu'après son contact avec le liquide séparateur, on sépare et/ou enlève la fraction des matières solides précipitées.

5. Procédé selon la revendication 1, caractérisé en ce qu'après une séparation grossière, on traite des matières plastiques dont les masses volumiques sont étroitement voisines, ou les matières plastiques présentant des masses volumiques qui se chevauchent, comme partie constitutive du mélange des matières plastiques, avec un solvant qui est un agent de gonflement d'au moins l'une des matières plastiques contenues dans le mélange et qui provoque une augmentation du volume de cette matière plastique, et l'on met ensuite la matière plastique, gonflée ou partiellement gonflée avec diminution de la masse volumique, en contact avec de l'eau ou avec des fractions de liquide séparateur présentant une gradation de la masse volumique d'au moins 0,01 g/cm³ et l'on sépare la fraction de matière plastique qui flotte ou celle qui tombe au fond.

6. Liquide lourd ou dense stabilisé, pour la séparation en fonction de la masse volumique de produits résiduaires ou déchets non minéraux contenant du métal, ces produits appartenant à l'ensemble formé par des matières plastiques, du verre et des déchets ou rebuts de matériels électriques et leurs mélanges, ce liquide consistant en une solution aqueuse de :
(1) un sel alcalin ou alcalino terreux de type méta tungstate présent en une concentration se situant dans le domaine de 1 à 80% en masse par rapport à la masse totale, et
(2) un agent d'oxydation, choisi dans l'ensemble formé par du chromate, du bichromate, du permanganate, du nitrate, des peracides, de peresters, présent en une concentration de 0,05 à 0,5% en masse par rapport à la quantité de tungstate de sodium.

7. Liquide lourd ou dense selon la revendication 6, caractérisé en ce que le sel alcalin est un sel de sodium ou de lithium, de préférence un sel de sodium.

8. Liquide lourd ou dense selon la revendication 6, caractérisé en ce que l'agent d'oxydation est le dichromate de potassium, le dichromate de sodium ou le permanganate de potassium.

9. Liquide lourd ou dense selon l'une des revendications 6 à 8, caractérisé en ce qu'il est présent sous forme de fractions d'une solution, de masses volumiques différentes présentant des gradations de 0,0µ05 à 0,1 g/cm³ dans le domaine des masses volumiques allant de 1 à 2,9 g/cm³, de préférence avec des gradations de 0,01 à 0,05 g/cm³.

10. Dispositif ou appareillage pour séparation au mouillé des constituants de mélanges de matières solides, de masses volumiques différentes, appareillage caractérisé par la présence d'un corps rotatif formé par une chambre de séparation (1), qui est séparé par deux disques (9) et (13), pouvant coulisser l'un par rapport à l'autre, des chambres de dépôt (2) à (7) se trouvant au-dessous de la chambre (1), les disques présentant une ouverture qui n'est pas plus grande que l'ouverture de l'orifice supérieur de chaque chambre de dépôt; éventuellement d'un rotor (10) disposé au centre du corps rotatif, ce rotor étant fermememt relié à un racloir (8); de volets ménagés au fond des chambres de dépôt (2) à (7).
